# FASCICULE DE BREVET EUROPEEN

(11) **EP 0 560 882 B1**
(45) Date de publication et mention de la délivrance du brevet: **04.03.1998**
(21) Numéro de dépôt: 92901353.0
(22) Date de dépôt: 04.12.1991
(51) Int. Cl.: C05B 1/02, C05B 11/08

(54) **PROCEDE DE FABRICATION DE PRODUITS PHOSPHO-AZOTES**
VERFAHREN ZUR HERSTELLUNG VON PHOSPHOR UND STICKSTOFF ENTHALTENDEN PRODUKTEN
METHOD FOR OBTAINING PHOSPHO-NITROGENOUS PRODUCTS

(30) Priorité: 05.12.1990 FR 9015522
(43) Date de publication de la demande: 22.09.1993
(73) Titulaire: GRANDE PAROISSE S.A., 92062 Paris la Défense Cedex (FR)
(72) Inventeur: ACHARD, Patrick, F-06130 Le Plan-de-Grasse (FR); ILBIZIAN, Pierre, F-06370 Mouans-Sartoux (FR); LIMOUSIN, Laurent, F-76230 Bois-Guillaume (FR); NEVEU, Bernard, F-92800 Puteaux (FR); PEUDPIECE, Jean-Bernard, F-76130 Mont St.-Aignan (FR); SCHWOB, Juan Alfred, F-06400 Cannes (FR)
(74) Mandataire: Derambure, Christian
(86) Numéro de dépôt international: FR9100965
(87) Numéro de publication internationale: WO9210443

(56) Documents cités:
- BR-A- 7 908 335
- FR-A- 523 121
- GB-A- 807 107
- US-A- 2 074 880

## Description

La présente invention concerne un procédé de fabrication de produits phospho-azotés dont le P₂O₅ est soluble dans le citrate neutre d'ammonium.

Les réactions d'attaque du phosphate tricalcique par les acides, notamment nitrique, sulfurique et phosphorique, destinées à produire des sels phosphatés solubles dans le citrate neutre d'ammonium et éventuellement dans l'eau, sont depuis longtemps utilisées industriellement dans la fabrication des engrais et des produits phosphatés à usage de l'alimentation animale.

L'urée est également employée, à grande échelle, en tant qu'engrais azoté. Du fait de la place majeure qu'elle occupe dans la plupart des pays en voie de développement, elle constitue même aujourd'hui la première source d'azote mondiale utilisée pour la fertilisation des sols. L'urée a également des usages dans l'alimentation animale.

Il est d'autre part connu depuis longtemps (les premiers travaux publiés sur le sujet datant de 1935) que l'acide sulfurique se combine avec l'urée et que les sulfates mono- et bi-uréiques obtenus ont la propriété de former des eutectiques. Des procédés, utilisant des compositions de ce type, destinés à produire des engrais azotés liquides (US-A-4 116 664 du 26/9/1978 et US-A-4 310 343 du 12/1/1982) ou à traiter des matériaux cellulosiques (US-A-4 818 269 du 4/4/1989) ont été récemment décrits.

Des compositions à base de sels phosphatés et d'urée sont également connues et utilisées dans la fabrication d'engrais complexes granulés. Elles sont généralement obtenues par mélange d'urée et de composés phosphatés du type superphosphates, produits par attaque du phosphate naturel avec l'acide sulfurique et/ou phosphorique. Mais la production industrielle et l'utilisation de ces produits se heurtent à de nombreuses difficultés qui en ont jusqu'à présent fortement limité le développement.

Ces difficultés tiennent au fait que l'urée, que l'on trouve toujours dans ces compositions essentiellement à l'état libre, a une forte tendance à se décomposer à partir de 60°C (soit en dessous des températures que l'on utilise habituellement pour sécher les engrais) en libérant de l'ammoniac qui provoque la rétrogradation du phosphate monocalcique en phosphate bicalcique. Elle a, d'autre part, la propriété de se substituer à l'eau des hydrates du sulfate de calcium et/ou des phosphates mono et bi-calciques présents dans les superphosphàtes, en libérant de l'eau libre qui favorise la déliquescence des granulés d'engrais et leur prise en masse.

Aussi les produits issus de ces procédés sont-ils extrêmement difficiles à sécher. Leurs qualités de conservation sont d'autre part très médiocres, ce qui exclut pratiquement la possibilité de les distribuer en vrac.

Le but de la présente invention est d'éviter, ces inconvénients majeurs, inhérents à tous ces procédés de production d'engrais composés granulés à base d'urée.

Suivant l'invention, le procédé de fabrication est tel que les sels phosphatés contenus dans les produits finis sont solubles dans le citrate neutre d'ammonium et qu'il ne subsiste plus ailleurs dans lesdits produits finis d'urée libre en quantité significative, cette dernière étant, en majeure partie, engagée dans une combinaison uréique du sulfate de calcium. Ce procédé est caractérisé en ce qu'on fait réagir du phosphate tricalcique avec un réactif obtenu par mélange d'acide sulfurique et d'urée.

Selon le procédé conforme à l'invention, il se produit alors une réaction de double décomposition, au cours de laquelle :
- le phosphate tricalcique est transformé, pour l'essentiel (de l'ordre de 80 à 90%) en phosphates monocalcique et uréique, solubles dans l'eau et le citrate neutre d'ammonium, et pour une part nettement plus faible (de l'ordre de 5 à 15%) en phosphate bicalcique, éventuellement combiné avec des molécules d'eau et d'urée, soluble dans le citrate neutre d'ammonium ;
- les ions sulfates se combinent à une partie des ions calcium et à l'urée pour former du sulfate de calcium tétra-uréate de formule : Ca SO₄, 4 CO(NH₂)₂.

La quasi totalité du P₂O₅ contenue dans le produit fini est soluble dans le citrate neutre d'ammonium et une forte proportion de ce P₂O₅, généralement supérieure à 80%, est soluble dans l'eau.

En présence d'eau, les uréates s'hydrolysent en libérant l'urée qu'ils contiennent. Aussi, lorsque l'on applique aux produits selon l'invention les méthodes analytiques normalisées utilisées pour contrôler les engrais (ces dernières passant toujours par la mise en solution préalable du produit à doser dans l'eau), dose-t-on la quasi totalité de l'azote qu'ils contiennent en tant qu'azote uréique.

Mais la combinaison de l'urée sous forme d'uréates confère aux produits obtenus des caractéristiques physico-chimiques très différentes de celles des composés fabriqués par ces procédés analysés ci-dessus dans lesquels la majeure partie de l'urée est présente à l'état libre. Ainsi, ils possèdent, sans qu'il soit nécessaire de les sécher, d'excellentes aptitudes de conservation en vrac. Ils sont en effet peu hygroscopiques et ils ne présentent aucune tendance à la déliquescence.

La demande brésilienne PI 7908335 décrit un tel procédé de fabrication de produits phosphoazotés par attaque de phosphate tricalcique par un réactif de préférence liquide correspondant aux sels sulfo-uréiques CO(NH2)2. H2S04 et [CO(NH2)2]2. H2SO4, à savoir des composés à une ou deux moles d'urée pour une mole d'acide sulfurique. Toutefois, de tels réactifs urée/acide sulfurique sont sous forme de sels cristallisés. Leur température de fusion est voisine de 70°C. Leur emploi nécessite un travail à chaud et l'introduction de quantités d'eau relativement importantes. Les produits obtenus selon ce procédé doivent dès lors être séchés, par des traitements qui ne sont pas sans affecter la qualité du produit final. Les deux sels sulfo-uréiques forment un eutectique El, pour une proportion de 1,3 mole d'urée par mole d'acide sulfurique, liquide au-dessus de 35°C.

Mais il existe un deuxième eutectique E2 entre le sel bi-uréique et l'urée, pour 3,6 moles d'urée par mole d'acide sulfurique, également liquide au-dessus de 35°C.

La demanderesse a tiré avantage de ce que, si la stabilité des sulfates mono et bi-uréiques est parfaite jusqu'à 90°, au dessus de cette température, ils commencent à se décomposer en libérant de l'anhydride carbonique gazeux et de l'ammoniac qui se combine avec les ions sulfates pour former du sulfate d'ammonium, que la dissolution de l'urée dans l'acide sulfurique étant très exothermique, on en limite les effets en utilisant un réactif proche de l'eutectique le moins riche en acide sulfurique. Compte tenu de ce contexte, et de ce que cet eutectique, par addition de quelques 10 % d'eau en masse, ne laisse apparaître aucune cristallisation au-dessus de -10°C, les demandeurs ont mis en évidence que les meilleures compositions réactionnelles correspondaient à des mélanges contenant un mole d'acide sulfurique pour 2 à 4 moles d'urée et contenant également entre 5 et 10 % d'eau en masse.

Le procédé selon l'invention est donc caractérisé en ce que l'on fait réagir du phosphate tricalcique avec un mélange comportant entre 3 et 4 moles d'urée pour une mole d'acide sulfurique et une quantité d'eau réduite, inférieure à 10 % en masse. De préférence, la quantité d'eau est de l'ordre de 5 % et le mélange urée/acide sulfurique est liquide.

Les particularités et avantages de l'invention apparaîtront encore dans la description ci-après des phases essentielles de la fabrication des produits correspondant à l'invention, en commençant par la préparation des réactifs sulfouréiques.

### Préparation des réactifs sulfo-uréiques

Dans les conditions de l'invention, l'effet exothermique global de la dissolution de l'urée dans l'acide sulfurique est facilement maîtrisable.

Des précautions sont toutefois à prendre dans l'ordre de mise en contact des divers constituants. Le mode opératoire suivant, mis au point par le demandeur, permet de contrôler très simplement ces effets thermiques. Il consiste à ajouter progressivement, à une quantité de réactif préparée au cours d'une opération précédente et maintenue en circulation dans un réacteur agité, l'acide sulfurique concentré, l'urée solide et éventuellement de l'eau, dans les proportions souhaitées. On prendra toutefois la précaution d'attendre, avant chaque nouvel ajout, la dissolution quasi complète de l'urée solide précédemment introduite. En opérant dans ces conditions, l'élévation de température d'un réacteur adiabatique ne dépasse pas quelques dizaines de degrés.

On pourra avantageusement, sur de grands réacteurs exploités en continu, installer des doubles enveloppes ou des serpentins de refroidissement, de manière à éviter de dépasser la température de 90°C, seuil au-dessus duquel l'urée incorporée dans le mélange a tendance à se décomposer en libérant de l'ammoniac et de l'anhydride carbonique.

On reste conforme à l'invention en remplaçant tout ou partie de l'acide sulfurique par de l'oléum. On peut également remplacer tout ou partie de l'urée solide par de l'urée en solution dans l'eau.

On reste également conforme à l'invention en ajoutant au réactif sulfo-uréique, contenant entre 2 à 4 moles d'urée par mole d'acide sulfurique, de l'acide phosphorique, dans une proportion molaire telle que le réactif final contienne entre 0,1 et 2 moles de P₂O₅ par mole d'acide sulfurique. Ce réactif demeure stable sensiblement dans les mêmes conditions que celles déjà énoncées pour les réactifs sulfo-uréiques.

Il convient toutefois, dans ces deux derniers cas, de tenir compte de la quantité d'eau apportée par les matières premières utilisées et des conséquences, sur le bilan thermique, de leur état physico-chimique.

### Solubilisation du phosphate de calcium par le réactif sulfo-uréique

On va maintenant décrire la deuxième phase du procédé, c'est-à-dire la réaction de solubilisation du phosphate de calcium par le réactif sulfo-uréique.

Lorsqu'un tel réactif est mis en contact avec du phosphate de calcium broyé, une réaction exothermique se développe. Elle correspond schématiquement à la transformation du phosphate tricalcique en phosphates mono- et/ou bi-calciques et/ou uréiques, tandis que les ions sulfates se fixent sur les ions calcium libérés, en formant un complexe uréique du sulfate de calcium que les demandeurs ont identifié comme étant le tétra-uréate du sulfate de calcium. Une partie de l'urée peut également se fixer aux phosphates mono- et/ou bi-calciques, sous forme d'uréates.

La caractérisation du sulfate de calcium tétra-uréate peut se faire par une méthode analytique non destructive, telle, par exemple, que la spectrographie par diffraction des rayons X, car, ainsi qu'il a été indiqué plus haut, les méthodes traditionnelles d'analyses chimiques en solution aqueuse entraînent l'hydrolyse de ce dernier et sa conversion en gypse et en urée.

Pour obtenir, dans le produit fini, le taux optimal de P₂O₅ soluble et pour bloquer sous forme de sulfate de calcium tétra-uréate l'essentiel de l'urée apportée, les quantités d'acide sulfurique et d'urée, entrant dans la composition du réactif sulfo-uréique utilisé pour traiter 1 kg de phosphate naturel, peuvent être calculées de la façon suivante :
- on évalue à partir de la teneur en calcium du phosphate naturel, le nombre M₁ de moles de Ca²⁺ contenues dans 1 kg du phosphate ;
- on évalue à partir de la teneur en P₂O₅ du même phosphate, le nombre M₂ de moles de P₂O₅ contenues dans 1 kg du phosphate ;
- le nombre M₃ de moles de Ca²⁺ disponibles pour une combinaison avec les ions SO₄²⁻ est égal à M₁ - M₂ (ce qui revient à retenir l'hypothèse simplificatrice que la totalité du P₂O₅ dans le produit fini est combinée avec des ions calcium sous forme de phosphate monocalcique) ;
- le nombre d'ions moles SO₄²⁻ apporté par le réactif sulfo-uréique devra donc être au moins égal à M₃.

La réaction entre le phosphate de calcium broyé (80% de passant au tamis de 80 microns) et le réactif sulfo-uréique se déroule en deux étapes facilement identifiables :
- Dans un premier temps, relativement court, d'une durée généralement inférieure à 10 minutes lorsque la température initiale du milieu réactionnel est comprise entre 50 et 70°C, un processus exothermique amène progressivement la masse réactionnelle de l'état liquide à l'état d'une bouillie. A ce stade, l'essentiel des transformations chimiques conduisant à la formation des phosphates solubles et du sulfate de calcium tétra-uréate est déjà très avancé.
- Succède alors à cette première étape, durant laquelle la température du milieu réactionnel, croît de l'ordre de 20°C, une seconde phase, à évolution plus lente, au cours de laquelle la réaction de solubilisation du phosphate s'achève et les composés formés cristallisent. La cristallisation des uréates donne lieu à un phénomène présentant beaucoup d'analogies avec le processus de prise des liants hydrauliques.

Lorsque le réactif sulfo-phospho-uréique est utilisé, le déroulement de l'ensemble des phases réactionnelles est analogue. Il en est de même lorsque certains constituants secondaires (sulfate de potassium, chlorure de potassium, kiesérite notamment) sont ajoutés au cours du processus réactionnel.

Dans la préparation du produit phosphoazoté, on maintient la température de la masse réactionnelle à une valeur inférieure à 90°C, de préférence entre 40 et 70°C. Le produit obtenu peut être granulé, la phase de granulation intervenant quelques minutes après le mélange du phosphate et du réactif ou à l'issue d'un temps de stockage plus ou moins long du produit obtenu.

### Identification de certains des composés formés

Le produit résultant de la réaction du phosphate tricalcique avec le réactif sulfo-(phospho)-uréique est réduit en poudre à la finesse nécessaire et analysé par diffraction des rayons X selon la méthode DEBYE-SCHERRER. On obtient ainsi un diagramme comportant les raies caractéristiques des espèces cristallines présentes.

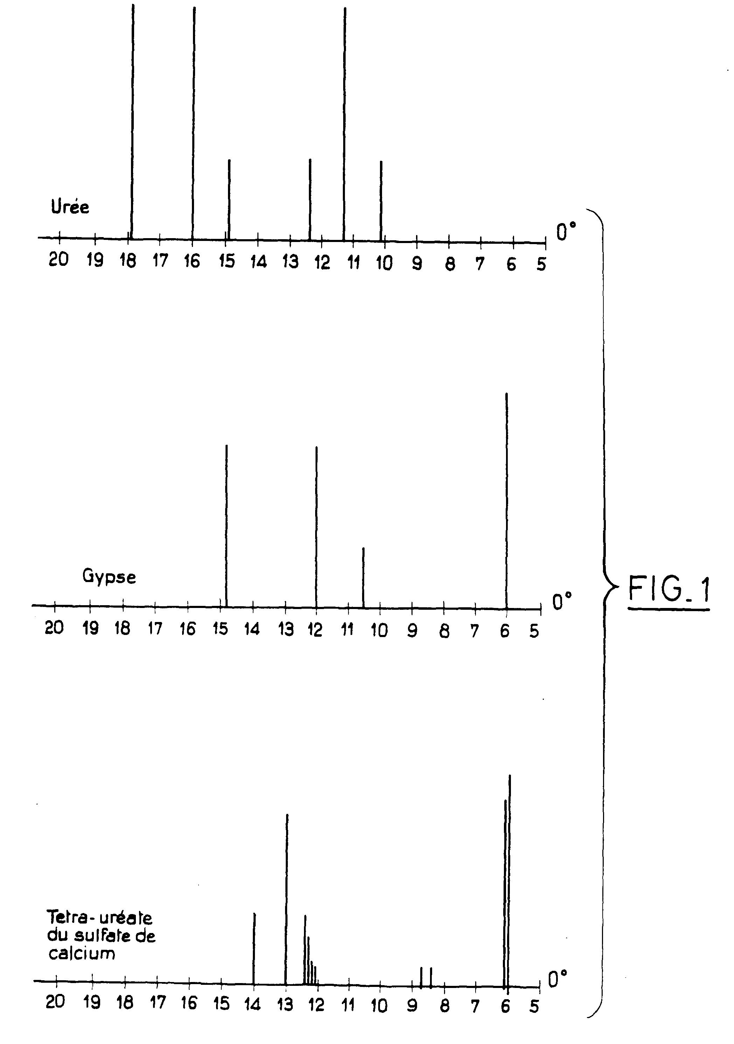

Sur la figure 1, nous avons porté, à titre de référence, les diagrammes comparés de l'urée, du gypse et du tétra-uréate du sulfate de calcium. Les raies de ces trois composés sont suffisamment caractéristiques pour qu'il soit permis de les identifier sans risque d'erreur.

Dans les produits fabriqués selon l'invention, il ne subsiste pas d'urée libre en quantité décelable par la méthode DEBYE-SCHERRER. Par contre, les raies caractéristiques du tétra-uréates du sulfate de calcium sont toujours clairement identifiables. Les raies correspondant au gypse ou à l'urée n'apparaissent que lorsque les proportions d'urée et de sulfate de calcium dans le produit final s'éloignent trop de la composition stroéchiométrique CaSO₄, 4CO(NH₂)₂.

Dans les produits obtenus par mélange de superphosphates avec de l'urée, on peut déceler parfois également la présence de sulfate de calcium tétra-uréate, mais en faible proportion et coexistant toujours avec du sulfate de calcium plus ou moins hydraté et de l'urée libre. Les produits correspondants, contrairement à ceux fabriqués selon l'invention, sont très difficiles à sécher et présentent un caractère fortement hygroscopique.

### Utilisation des composés obtenus dans la composition d'engrais complexes

Les produits obtenus selon l'invention, dans lesquels la quasi totalité du P₂O₅ est soluble dans le citrate neutre d'ammonium et dans lesquels les uréates présents s'hydrolysent en phase aqueuse en libérant l'urée peuvent être utilisés, en l'état, en tant que fertilisants NP soufrés. Ils peuvent être granulés ou compactés par tous les procédés connus.

Il est particulièrement avantageux d'effectuer l'opération de granulation quelques minutes après le mélange, dans un réacteur vigoureusement agité, du phosphate et du réactif sulfo-(phospho-)uréique, de façon à profiter de l'état encore liquide du milieu réactionnel pour favoriser, dans un premier temps, l'agglomération des particules solides recyclées et à bénéficier, dans un second temps, du processus de "prise" pour assurer la cohésion et le durcissement des grains ainsi formés.

Mais il est également possible de granuler ou de compacter les produits, selon l'invention, après une période plus ou moins longue de mûrissement. Afin d'éviter leur prise en masse au cours du stockage, il est dans ce cas souhaitable de désagréger la masse réactionnelle au cours de sa phase de "prise", avant qu'elle n'ait déjà acquis une trop grande résistance mécanique.

Les produits obtenus selon l'invention peuvent encore être utilisés, en mélange avec un certain nombre d'autres matières premières azotés, phosphatés ou potassiques dans la formulation d'engrais complexes granulés. Leur compatibilité avec les produits suivants a été notamment vérifiée : sulfate d'ammoniac, MAP, DAP, chlorure de potassium, sulfate de potassium.

Des éléments fertilisants secondaires (magnésie sous forme de kiesérite, par exemple), des oligo-éléments (cuivre, zinc, bore, etc.) ainsi que des inhibiteurs de nitrification (dicyandiamide, par exemple) peuvent également être incorporés dans ces formulations d'engrais complexes.

### Utilisation des composés obtenus dans la composition d'aliments de complémentation pour animaux

Les végétaux ensilés utilisés pour nourrir les animaux ne fournissent qu'une partie des éléments nutritifs indispensables. La ration alimentaire des animaux doit donc être souvent complétée, principalement en sels minéraux (notamment phosphates mono- ou bi-calciques) et en protéines. Dans le cas des ruminants qui ont la faculté de transformer l'urée en protéines, on peut remplacer tout ou partie du complément protéinique par des doses contrôlées d'urée.

Les produits selon l'invention -composés de phosphates mono- et bi-calciques, et de sulfate de calcium tétra-uréate qui a la propriété de s'hydrolyser en phase aqueuse en libérant progressivement de l'urée-peuvent être utilisés pour composer des aliments de complémentation pour les animaux. Il est évidemment nécessaire, dans ce cas, de partir de matières premières phosphatées (poudres d'os, phosphates calciques à teneurs contrôlées en fluor et en métaux lourds) ne contenant pas d'impuretés préjudiciables à l'état de santé de ces derniers.

### Exemple 1 :

On traite 1 kg de phosphate naturel du Maroc contenant 32% de P₂O₅ et 52% de CaO par un mélange sulfo-uréique contenant 3,6 moles d'urée pour une mole d'acide sulfurique dans un réacteur agité muni d'un dispositif de maintien de la température. La quantité de réactif nécessaire est calculée comme suit :
- 52% de CaO dans 1 kg de phosphate correspondent à 9,285 moles,
- 32% de P₂O₅ dans 1 kg de phosphate correspondent à 2,253 moles.

L'acide sulfurique nécessaire pour fixer le calcium libéré par la transformation du phosphate tricalcique en phosphate monocalcique est théoriquement équivalent à 9,285 - 2,253 = 7,032 moles, ce qui correspond à 0,689 kg d'acide sulfurique.

La quantité d'urée nécessaire pour composer un réactif contenant 3,6 moles d'urée par mole d'acide sulfurique est donc égale à : 7,032 x 3,6 x 0,060 = 1,519 kg.

Le phosphate naturel est préalablement moulu, de manière à présenter une granulométrie moyenne inférieure à 100 µ. 1 kg de ce phosphate est introduit à l'intérieur du réacteur dans lequel est ajouté progressivement les 2,208 kg de réactif préalablement préparés et maintenus à 50°C. La température du milieu réactionnel est contenue dans une fourchette comprise entre 60 et 70°C, en modulant le débit d'introduction du réactif.

Au bout de 5 à 6 minutes, la viscosité du mélange réactionnel liquide commence à augmenter. On arrête alors l'agitation. La température se stabilise entre 70°C et 90°C. Au bout de 2 heures, toute la masse réactionnelle est solidifiée. L'analyse du produit révèle la composition suivante, les dosages étant effectués par les méthodes normalisées en usage dans la profession des engrais :

| | |
|---|---|
| P₂O₅ total | 10,00 % |
| P₂O₅ soluble eau | 9,05 % |
| P₂O₅ soluble citrate | 9,80 % |
| N total | 21,75 % |
| N uréique | 20,55 % |

L'analyse spectrale réalisée sur le produit, après un jour de stockage, ne révèle aucune raie caractéristique de l'urée alors que les raies correspondant au sulfate de calcium tétra-uréique sont clairement identifiables. L'urée étant toutefois en défaut par rapport au sulfate de calcium pour que la totalité de ce dernier soit engagée sous forme de tétra-uréate, des raies de faible intensité correspondant au sulfate de calcium sont également détectables.

Le produit final peut être granulé ou compacté par tous les moyens connus.

### Exemple 2 :

On procède d'une manière semblable à l'exemple 1, mais on ajoute au réactif une proportion d'eau de 5% soit environ 0,110 kg, ce qui revient à employer en tout 2,318 kg de réactif pour 1 kg de phosphate.

Le mélange réactionnel évolue alors plus rapidement que dans l'exemple précédent. L'élévation maximale de la température, coïncidant avec le début de la phase d'augmentation de la viscosité du mélange, intervient en effet au bout de trois minutes. L'analyse du produit solide obtenue au bout d'une heure donne les résultats suivants :

| | |
|---|---|
| P₂O₅ total | 9,67 % |
| P₂O₅ soluble eau | 9,00 % |
| P₂O₅ soluble citrate | 9,57 % |
| N total | 21,03 % |
| N uréique | 20,85 % |

Le taux de solubilisation du P₂O₅ dans le citrate neutre d'ammonium est donc de l'ordre de 99%.

L'analyse spectrale du produit par diffraction X ne révèle pas la présence d'urée libre. Elle démontre par contre clairement la présence de sulfate de calcium tétra-uréate.

### Exemple 3 :

On procède comme dans l'exemple 1 mais on ajoute au réactif sulfo-uréique avant de le faire entrer en réaction avec le phosphate, de l'acide phosphorique industriel titrant environ 54% de P₂O₅. Le réactif liquide est donc constitué, in fine, du mélange suivant :

| | |
|---|---|
| urée solide | 1,054 kg |
| acide sulfurique 95% | 0,505 kg |
| acide phosphorique à 54% de P₂O₅ | 0,541 kg |
| soit au total : | 2,100 kg |

Ce mélange contient, du fait de la composition des acides employés, 0,145 kg d'eau soit environ 6,9% par rapport à la somme des masses des composants. En faisant réagir ce réactif avec 1 kg de phosphate identique à celui utilisé dans les trois exemples précédents, on obtient, au bout de 6 minutes, une pâte compacte. L'analyse du produit après prise donne les résultats suivants :

| | |
|---|---|
| P₂O₅ total | 19,78 % |
| P₂O₅ soluble eau | 18,42 % |
| P₂O₅ soluble citrate | 18,79 % |
| N total | 15,54 % |
| N uréique | 15,37 % |
| soit un taux de P₂O₅ assimilable de | 95 % |

L'analyse spectrale du produit conduit aux mêmes conclusions que celles relevées dans les exemples précédents.

### Exemple 4

On part du produit dont la préparation est décrite dans l'exemple 2. Environ 20 minutes après mélange du phosphate et du réactif sulfo-uréique, on désagrège, à l'aide d'un émotteur, la masse solide obtenue en particules de dimensions inférieures à 3 mm. A l'issue d'une semaine de stockage à l'air libre à température ambiante, on introduit 3 kg du produit ainsi obtenu, préalablement préchauffé à 80°C, dans un granulateur de type "Eirich". On ajoute dans le mélange environ 0,1 kg d'eau et on maintient, pendant toute la durée de l'opération, la température à l'intérieur du granulateur à 80°C en balayant ce dernier par un courant d'air chaud. Au bout de 10 à 15 minutes, les granulés obtenus sont criblés. La fraction granulométrique comprise entre 3 et 5 mm est séparée, puis refroidie à la température ambiante.

On obtient ainsi un engrais granulé NP, de formule de 20.10.0, possédant, sans qu'il soit nécessaire de le sécher, d'excellentes aptitudes de conservation. L'analyse du produit par diffraction X ne permet pas de déceler la présence d'urée libre. Par contre, elle permet de mettre clairement en évidence la présence de sulfate de calcium tétra-uréate.

### Exemple 5

On prépare un engrais granulé NP, à l'urée, de formule 20.10.0, mais en suivant cette fois-ci le mode opératoire traditionnel. On mélange ainsi, dans un granulateur de type "Eirich", 1,5 kg de SSP (super simple phosphate titrant 20% de P₂O₅ soluble citrate, obtenu par attaque du phosphate du Maroc avec de l'acide sulfurique) avec 1,4 kg d'une solution d'urée à 95% dans l'eau, à 120°C. Un léger dégagement d'ammoniac se produit. Au bout d'environ 10 minutes, les granulés formés sont criblés et la fraction granulométrique comprise entre 3 et 5 mm est refroidie à la température ambiante. Les granulés obtenus ont un aspect hygroscopique. Leur analyse, effectuée quelques heures plus tard, donne les résultats suivants :

| | |
|---|---|
| P₂O₅ total | 10,95% |
| P₂O₅ soluble citrate | 10,26% |
| P₂O₅ soluble eau | 8,2% |
| N total | 20,42% |
| N uréique | 19,76% |
| N ammoniacale | 0,66% |

L'examen spectral du produit par diffraction X met en évidence la présente d'urée libre en forte proportion alors qu'elle ne décèle que des traces de sulfate de calcium tétra-uréate.

### Exemple 6 :

Dans un réacteur cylindrique, équipé d'un agitateur à vitesse variable, on introduit successivement :
- 0,664 kg de réactif sulfo-uréique à 50°C, obtenu en mélangeant 0,432 kg d'urée solide, 0,196 kg d'acide sulfurique à 96% et 0,036 kg d'eau ;
- 0,455 kg du phosphate du Maroc broyé (94% de passant au tamis de 80 microns)
- 0,219 kg de sulfate de potassium.

On agite le mélange pendant environ 2 minutes à la vitesse maximale (environ 1500 tours/minutes), puis dès que le mélange commence à épaissir on réduit la vitesse de l'agitateur autour de 200 tours/minutes. Des granulés se forment alors progressivement et au bout d'environ 10 minutes ces derniers possèdent une résistance mécanique suffisante pour pouvoir être criblés entre 3 et 5 mm. On obtient ainsi un engrais ternaire NPK de formule 15. 10. 08, possédant d'excellentes aptitudes de conservation.

### Exemple 7 :

On part, comme dans l'exemple 4, du produit dont la préparation est décrite dans l'exemple 2. Environ 20 minutes après mélange du phosphate et du réactif sulfo-uréique, on désagrège, à l'aide d'un émotteur, la masse solide obtenue en particules de dimensions inférieures à 3 mm. A l'issue d'une semaine de stockage à l'air libre à température ambiante, on introduit 2 kg du produit ainsi obtenu, préalablement préchauffé à 80°C, dans un granulateur de type "Eirich". On ajoute alors successivement dans le granulateur 0,750 kg de DAP (18.46.00), 0,735 kg de chlorure de potassium et 0,250 kg d'eau, également préchauffés à 80°C, ainsi qu'une faible quantité d'ammoniac de façon à maintenir le pH au-dessus de 5. Au bout d'environ 15 minutes, les granulés formés sont criblés entre 3 et 5 mm, puis refroidis. On obtient ainsi un engrais NPK, de formule 15.15.13 possédant d'excellentes aptitudes de conservation.

## Revendications

1. Procédé de fabrication de produits phosphoazotés dont le P205 est quasiment entièrement soluble dans le citrate neutre d'ammonium et dans lesquels il ne subsiste pas d'urée libre en quantité significative, cette dernière étant, en majeure partie, engagée dans une combinaison uréique du sulfate de calcium, caractérisé en ce qu'on fait réagir du phosphate tricalcique avec un mélange de préférence liquide comportant entre 3 et 4 moles d'urée pour une mole d'acide sulfurique et une quantité d'eau réduite, inférieure à 10 % en masse, et de préférence de l'ordre de 5 %.

2. Procédé conforme à la revendication 1, caractérisé en ce qu'on ajoute au réactif obtenu par mélange d'acide sulfurique et d'urée de l'acide phosphorique dans une proportion molaire telle que la composition obtenue contienne entre 0,1 et 2 moles de P205 par mole d'acide sulfurique.

3. Procédé conforme à l'une des revendications 1 à 2, caractérisé en ce qu'on maintient la température de la masse réactionnelle à une valeur inférieure à 90°C et de préférence entre 40 et 70°C.

4. Procédé conforme à l'une des revendications 1 à 3, caractérisé en ce que le produit obtenu est granulé, la phase de granulation intervenant quelques minutes après le mélange du phosphate et du réactif.

5. Procédé conforme à l'une des revendications 1 à 3, caractérisé en ce qu'après la réaction entre le phosphate et ledit mélange, le produit résultant est granulé ou compacté après achèvement de la réaction entre le phosphate et le réactif.

6. Procédé conforme à l'une des revendications 1 à 5, caractérisé en ce qu'on ajoute au mélange réactionnel et/ou au produit résultant de la réaction, au moins un constituant choisi parmi :
- les matières azotées telles que le sulfate d'ammoniac ou le DAP ;
- les matières phosphatées telles que les phosphates naturels broyés, le TSP, le MAP ou le DAP ;
- les matières potassiques telles que le chlorure ou le sulfate de potassium ;
- les éléments fertilisants secondaires tels que la kiesérite et le gypse ;
- les oligo-éléments ;
- et les mélanges de plusieurs de ces constituants.

7. Procédé conforme à l'une des revendications 1 à 6, caractérisé en ce que le phosphate de calcium est du phosphate d'origine naturelle, les produits obtenus étant destinés à la fertilisation des sols.

8. Procédé conforme à l'une des revendications 1 à 7, caractérisé en ce que le phosphate de calcium utilisé est exempt de composés incompatibles avec l'alimentation animale, les produits obtenus étant destinés à entrer dans la composition d'aliments de complémentation pour les animaux.

## Patentansprüche

1. Herstellungsverfahren von phosphorstickstoffhaltigen Produkten, deren P205 fast völlig in neutralem Ammoniumzitrat löslich ist, und in denen keine nennenswerte Menge von freiem Harnstoff verbleibt, wobei letzterer zum grössten Teil in einer ureischen Kombination des Kalziumsulfats engagiert ist, dadurch gekennzeichnet, dass man dreibasiges Kalziumphosphat mit einer vorzugsweise flüssigen Mischung, bestehend aus 3 bis 4 Mol Harnstoff für ein Mol Schwefelsäure und einer geringen Wassermenge von massemässig weniger als 10 %, und vorzugsweise von etwa 5 %, zum reagieren bringt.

2. Verfahren nach Anspruch 1, dadurch gekennzeichnet, dass man der durch Mischung von Schwefelsäure und Harnstoff erhaltenen Reagenz Phosphorsäure hinzufügt, und zwar in einer derartigen Mol-Proportion, dass die erhaltene Zusammensetzung zwischen 0,1 bis 2 Mol P205 pro Mol Schwefelsäure enthält.

3. Verfahren nach einem der Ansprüche 1 bis 2, dadurch gekennzeichnet, dass man die Temperatur der Reagenzmasse auf einem Wert von weniger als 90°C und vorzugsweise zwischen 40 und 70°C aufrechterhält.

4. Verfahren nach einem der Ansprüche 1 bis 3, dadurch gekennzeichnet, dass das erhaltene Produkt gekörnt ist, wobei die Granulation einige Minuten nach dem Mischen des Phosphors und der Reagenz erfolgt.

5. Verfahren nach einem der Ansprüche 1 bis 3, dadurch gekennzeichnet, dass das aus der Reaktion zwischen dem Phosphat und der besagten Mischung resultierende Produkt nach Beendigung der Reaktion zwischen dem Phosphor und der Reagenz gekörnt oder kompaktiert ist.

6. Verfahren nach einem der Ansprüche 1 bis 5, dadurch gekennzeichnet, dass man der Reagenzmischung und/oder dem aus der Reaktion resultierenden Produkt mindestens einen der folgenden Bestandteile hinzufügt:
- stickstoffhaltige Stoffe wie Ammoniaksulfat oder DAP;
- phosphathaltige Stoffe wie zermahlene, natürliche Phosphate, TSP, MAP oder DAP;
- kaliumhaltige Stoffe wie Kaliumsulfat oder -chlorid.
- sekundäre, fertilisierende Elemente wie Kieserit und Gips;
- Spurenelemente;
- und Mischungen mehrerer dieser Bestandteile.

7. Verfahren nach einem der Ansprüche 1 bis 6, dadurch gekennzeichnet, dass das Kalziumphosphat ein Phosphat natürlichen Ursprungs ist, wobei die hergestellten Produkte für die Fertilisierung von Böden bestimmt sind.

8. Verfahren nach einem der Ansprüche 1 bis 7, dadurch gekennzeichnet, dass das verwendete Kalziumphosphat keine Bestandteile enthält, die nicht mit der Tierernährung kompatibel sind, wobei die hergestellten Produkte dazu bestimmt sind, der Zusammensetzung von Ergänzungsfuttermitteln für Tiere hinzugefügt zu werden.

## Claims

1. A method for manufacturing phospho-nitrogenous products in which the P205 is almost entirely soluble in neutral ammonium citrate and in which no significant amount of uncombined urea remains, the latter, mostly, being combined in a calcium sulfate urea compound, characterized in that tricalcium phosphate is reacted with a preferably liquid mixture including 3 to 4 moles of urea for one mole of sulfuric acid and a small amount of water, less than 10% by weight, and preferably approximately 5%.

2. A method according to claim 1, characterized in that to the reagent obtained by mixing the sulfuric acid with the urea is added phosphoric acid with a molar ratio such that the composition obtained contains 0.1 to 2 moles of P205 per mole of sulfuric acid.

3. A method according to any of claims 1 or 2, characterized in that the temperature of the reaction mass is maintened below 90°C and preferably between 40 and 70°C.

4. A method according to any of claims 1 to 3, characterized in that the product obtained is granulated, with the granulation phase occurring a few minutes after the mixing of the phosphate with the reagent.

5. A method according to any of claims 1 to 3, characterized in that after the reaction between the phosphate and said mixture, the resulting product is granulated or compacted when the reaction between the phosphate and the reagent is completed.

6. A method according to any of claims 1 to 5, characterized in that to the reaction mixture and/or the product resulting from this reaction, are added at least one substance among the following:
- nitrogenous substances, such as ammonium sulfate or DAP;
- phosphatic substances, such as ground natural phosphates, TSP, MAP or DAP;
- potassic substances, such as potassium sulfate or chloride;
- secondary fertilizing substances, such as kierserite and gypsum;
- trace elements;
- and mixtures thereof.

7. A method according to any of claims 1 to 6, characterized in that the calcium phosphate is natural phosphate, the products obtained being intended for use as fertilizers.

8. A method according to any of claims 1 to 7, characterized in that the calcium phosphate used is free of any substances incompatible with use in animal feed, the products obtained being intended as nutritional substitutes for animal feed.
